# EUROPÄISCHE PATENTSCHRIFT

(11) **EP 1 361 369 B1**
(45) Veröffentlichungstag und Bekanntmachung des Hinweises auf die Patenterteilung: **16.05.2007**
(21) Anmeldenummer: 03008371.1
(22) Anmeldetag: 10.04.2003
(51) Int. Cl.: F15B 15/14, F15B 15/16, B60P 1/16

(54) **Kolben-Zylinder-Aggregat als Kippbetätigungselement für die Kippbrücke eines Kipperfahrzeuges**
Piston-cylinder assembly as tip actuation element for the tipping body of a tipper lorry
Assemblage piston-cylindre comme élément d'actionnement de basculement pour la benne basculante d'un camion à benne basculante

(30) Priorität: 10.05.2002 DE 20207383 U
(43) Veröffentlichungstag der Anmeldung: 12.11.2003
(73) Patentinhaber: Franz Xaver Meiller Fahrzeug- und Maschinenfabrik-GmbH & Co KG, 80997 München (DE)
(72) Erfinder: Mairle, Rudolf, 82362 Weilheim (DE); Märkl, Günter, 85229 Markt Indersdorf (DE)
(74) Vertreter: Tiesmeyer, Johannes

(56) Entgegenhaltungen:
- DE-A1- 3 531 823
- DE-A1- 19 959 799
- DK-B- 115 660
- SU-A1- 1 519 937

## Beschreibung

Die Erfindung betrifft ein Kolben-Zylinder-Aggregat, insbesondere eine Teleskoppresse als Kippbetätigungselement für die Kippbrücke eines Kipperfahrzeuges, wobei das Kolben-Zylinder-Aggregat an seinem ausfahrbaren Kolbenstangenende ein Gelenkelement für eine Gelenkverbindung zwischen dem Kolben-Zylinder-Aggregat und der Kippbrücke aufweist, wobei das Gelenkelement einen Schaft hat, der in einer stirnseitigen Führungsausnehmung des ausfahrbaren Kolbenstangenendes relativ zu der Kolbenstange axial verschiebbar gehalten ist.

Bei Kipperfahrzeugen mit hydraulischer Kippbetätigung des kippbaren Aufbaus bzw. der Kippbrücke dient ein solches Kolben-Zylinder-Aggregat als Antriebsgerät, welches einerseits an der Kippbrücke und andererseits am Rahmen des Kipperfahrzeugs vermittels betreffender Gelenkverbindungen angelenkt ist.

Üblicherweise - wenngleich nicht ausschließlich - handelt es sich bei den hier betrachteten Kipperpressen um Teleskopzylinderpressen, deren Kolbenelemente durch hydraulische Beaufschlagung teleskopisch ausfahrbar sind. Auf diese Weise kann ein vergleichsweise großer Kipphub erreicht werden.

In der normalen Fahrstellung der Kippbrücke sind die Teleskopkolbenelemente weitgehend in ihrer zurückgezogenen Stellung.

Während der Fahrt des Kipperfahrzeugs und insbesondere während einer Leerfahrt auf unebenem Gelände kann es zu erheblichen Vibrationen und Relativbewegungen zwischen dem Fahrzeugrahmen und der Kippbrücke kommen. Diese Relativbewegungen führten bei Kipperfahrzeugen auch dazu, dass die Kolbenelemente relativ zueinander in unkontrollierter Weise hin- und herbewegt werden. Insbesondere das an der Kippbrücke angelenkte Kolbenelement wird bei Fahrt des Kipperfahrzeugs auf unebener Straße zur Hin- und Herbewegung relativ zu dem es unmittelbar umgebenden Teleskoprohr gezwungen. Diese unkontrollierten Vibrationen und Zwangsbewegungen gehen mit erhöhtem Verschleiß des betreffenden Kolbenelementes einher. Insbesondere aufgrund von Reibung an einem oder mehreren Dichtringen ist es dabei häufig zu erheblichen Beschädigungen und zu Abdichtungsproblemen am Umfang des betreffenden Kolbenelementes gekommen. Normalerweise ist das bei einer Teleskoppresse radial innerste Kolbenelement über eine betreffende Gelenkverbindung mit der Kippbrücke verbunden und den vorstehend angesprochenen Verschleißeffekten am stärksten ausgesetzt. Im Rahmen der vorliegenden Anmeldung wird dieses an der Kippbrücke angelenkte Kolbenelement auch als Kolbenstange bezeichnet.

In der DK 115 660 B wird ein Beispiel eines Kolben-Zylinder-Aggregats mit allen eingangs genannten Merkmalen des Oberbegriffs des Anspruchs 1 vorgeschlagen, dessen Gelenkelement innerhalb einer mit Öl gefüllten Führungsausnehmung einer Kolbenstange vermittels einer Feder federnd gelagert ist, wobei die Feder zwischen dem Boden der Führungsausnehmung und dem Gelenkelement angeordnet ist.

Aufgabe der vorliegenden Erfindung ist es, ein Kolben-Zylinder-Aggregat der eingangs genannten Art bereitzustellen, welches mit einfachen Mitteln wirksam gegen erhöhten Verschleiß aufgrund von Vibrationsbewegungen im Normalfahrbetrieb des Kipperfahrzeugs geschützt ist.

Diese Aufgabe wird durch ein Kolben-Zylinder-Aggregat gemäß Anspruch 1 gelöst.

Bei normaler Fahrstellung, also heruntergeklappter Stellung der Kippbrücke, kann sich ein Zustand einstellen, in dem der Gelenkelementschaft mit Axialspiel an dem ausfahrbaren Kolbenstangenende angekoppelt ist, so dass Relativbewegungen zwischen dem Fahrzeugrahmen und der Kippbrücke zumindest teilweise durch das Axialspiel zwischen Gelenkelementschaft und Kolbenstangenende aufgenommen werden und dass es insoweit nicht zur Bewegung zwischen der Kolbenstange und dem die Kolbenstange umgebenden Zylinderrohr kommt. Damit ist eine wesentliche Ursache der oben beschriebenen Verschleißeffekte unterdrückt. Die Axialspiellagerung des Gelenkelementes kann mit einfachen Mitteln realisiert werden, indem in einem Freiraum zwischen dem Boden der Führungsausnehmung und dem dem Boden gegenüberliegenden Ende des Gelenkelementschaftes außer etwaigen Schmiermittelansammlungen im Wesentlichen nur Gas, insbesondere Luft, vorhanden ist. Die Führungsausnehmung kann eine radial zentrale Axialbohrung in dem ausfahrbaren Kolbenstangenende sein, wobei der Gelenkelementschaft zur Bewegung innerhalb seines Axialspiels in dieser Bohrung aufgenommen ist.

Zur Vermeidung von unerwünschten Temperaturerhöhungen aufgrund der Kompression der Luft in dem Freiraum bei stoßweiser Einschubbewegung des Gelenkelementeschaftes ist es gemäß einer Variante der Erfindung vorgesehen, dass ein Luftleitungskanal den Freiraum mit der Atmosphäre verbindet. Gemäß einer Weiterbildung der Erfindung erstreckt sich dieser Luftleitungskanal durch das Gelenkelement.

Vorzugsweise ist das Gelenkelement bedarfsweise demontierbar an der Kolbenstange axial verschiebbar fixiert, so dass es für den Fall einer Reparatur leicht ausgebaut bzw. ausgetauscht werden kann.

Die Führungsausnehmung kann eine im Wesentlichen zylindrische Axialbohrung oder dgl. in dem Kolbenstangenende sein, wobei der in dieser Führungsausnehmung aufgenommene Gelenkelementschaft einen Bereich verkleinerten Durchmessers mit wenigstens einem in diesem Bereich am Umfang des Gelenkelementschaftes anliegenden Sicherungselement aufweist. Zwischen dem Sicherungselement und der stirnseitigen Mündung der Führungsausnehmung ist bei einer bevorzugten Ausführungsform der Erfindung eine als Axialanschlag für das Sicherungselement wirkende Stufe in der Führungsausnehmung vorhanden, so dass das Sicherungselement den Gelenkelementschaft gegen vollständiges Herausziehen aus der Führungsausnehmung sichert.

Die als Axialanschlag für das Sicherungselement wirkende Stufe ist gemäß einer Weiterbildung der Erfindung an einem lösbar mit der Kolbenstange verbundenen Einsatz ausgebildet.

Als Sicherungselement kommt vorzugsweise ein Sicherungsring, z.B. Drahtring oder Sprengring, in Frage.

Auch können Sicherungselemente vorgesehen sein, deren radiale Ausdehnung mittels einer Spreizeinrichtung oder dgl. eingestellt werden kann, um sie aus einer neutralen Stellung heraus, in der sie an der Stufe vorbeiführbar sind, in eine Sicherungsstellung zu überführen.

Die Erfindung wird nachstehend unter Bezugnahme auf die Figuren näher erläutert.
- Fig. 1: zeigt eine teils geschnitten - teils gebrochen dargestellte Seitenansicht des einer Kippbrücke zugewandten Endes eines Kolben-Zylinder-Aggregates nach der Erfindung in einer der normalen Fahrtstellung der Kippbrücke entsprechenden Situation.
- Fig. 2: zeigt eine Variante des Kolben-Zylinder-Aggregates aus Fig. 1 in einer teils geschnitten und teils gebrochen dargestellten Seitenansicht des im montierten Zustand der Kippbrücke zugewandten Endes des Kolben-Zylinder-Aggregates.
- Fig. 3: zeigt ein zweites Ausführungsbeispiel der Erfindung in einer teils gebrochen und teils geschnitten dargestellten Seitenansicht des im montierten Zustand der Kippbrücke zugewandten Endes des Kolben-Zylinder-Aggregates.

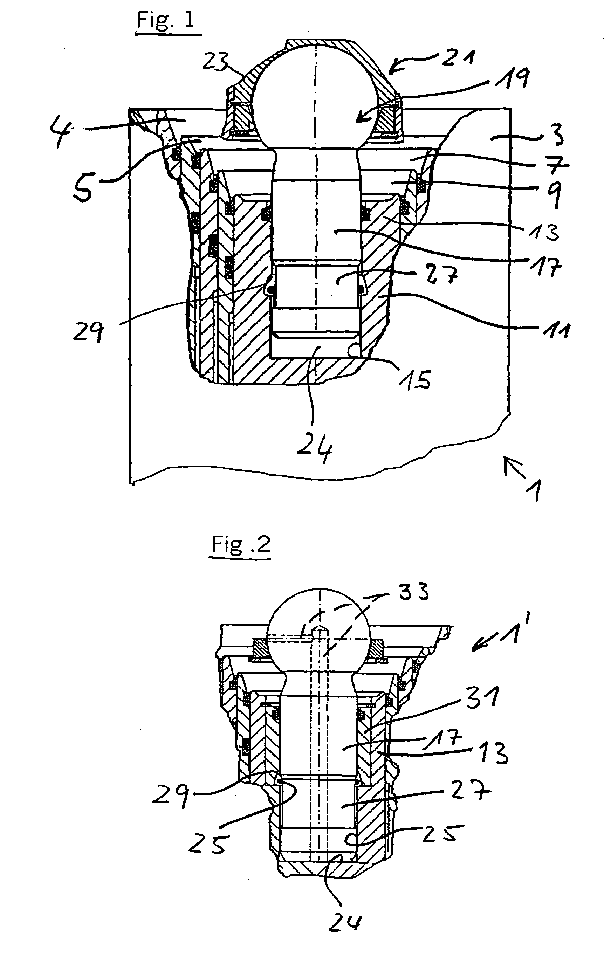

In Fig. 1 ist das in der Montageanordnung am Kipperfahrzeug der Kippbrücke zugewandte Ende eines Kolben-Zylinder-Aggregates 1 nach einer Ausführungsform der Erfindung erkennbar. Es handelt sich bei dem Kolben-Zylinder-Aggregat 1 um eine Teleskoppresse mit einem Außenrohr 3 und darin teleskopisch verschachtelt aufgenommenen Teleskopelementen (Kolbenelementen) 4, 5, 7, 9, 11. Das radial zentrale Kolbenelement 11 wird im Rahmen der vorliegenden Anmeldung als Kolbenstange bezeichnet und weist an seinem ausfahrbaren Kolbenstangenende 13 eine radial zentrierte Axialbohrung 15 auf, in der ein Schaft 17 eines Gelenkelementes 19 aufgenommen ist. Der Schaft 17 ist axial verschiebbar in der Führungsbohrung 15 aufgenommen, so dass Axialbewegungen des Gelenkelementes 19 innerhalb eines begrenzten Axialspieles stattfinden können, ohne dass solche Bewegungen auf die Kolbenelemente 5, 7, 9, 11 zwangsweise übertragen werden. Damit ist die oben erläuterte Ursache für erhöhten Verschleiß konventioneller Kipperpressen fast vollständig beseitigt. Nichtaxiale Komponenten von Relativbewegungen von Fahrzeugrahmen und Kipperpresse werden größtenteils an den Gelenkverbindungen beiderseits der Kipperpresse kompensiert.

Im Beispielsfalle der Figur 1 handelt es sich bei der kippbrückenseitigen Gelenkverbindung 21 um eine Kugelgelenkverbindung, z.B. für einen Dreiseitenkipper, wobei das Gelenkelement 19 den Kugelteil aufweist. Die den Kugelteil aufnehmende Gelenkpfanne 23 befindet sich an der Kippbrücke.

Der Freiraum 24 zwischen dem Boden der Bohrung 15 und der Unterseite des Schaftes 17 enthält außer etwaigen Schmiermittelansammlungen lediglich Luft. Es sind keine Vorspannelemente oder dgl. in dem Freiraum 24 vorgesehen.

Gemäß der Ausführungsform nach Fig. 1 ist der je nach Axialstellung des Gelenkelementschaftes 17 mehr oder weniger große Freiraum 24 nach außen hin im Wesentlichen abgeschlossen, so dass die darin befindliche Luft ein komprimierbares bzw. dekomprimierbares Luftpolster bildet.

Zur Sicherung des Schaftes 17 in der Führungsausnehmung 15 ist ein Drahtring 25 vorgesehen, welcher einen Bereich verkleinerten Durchmessers 27 des Schaftes 17 an dessen Umfang umgibt und in einem Bereich 29 vergrößerten Durchmessers der Führungsausnehmung 15 eingesperrt ist. Auf diese Weise ist das Gelenkelement 19 unverlierbar in der Führungsaufnahme 15 gesichert und das Axialspiel der Bewegung des Schaftes 17 im Wesentlichen durch die axiale Länge des Bereichs verkleinerten Durchmessers des Schaftes 17 abzüglich des Drahtdurchmessers des Sicherungsdrahtes größenmäßig definiert.

Zur Montage wird zunächst der Drahtring 25 in den Bereich 29 der Führungsausnehmung 15 eingebracht und danach dann der Schaft 17 in die Bohrung 15 eingeführt. Sobald der Bereich 27 des Schaftes 17 dabei den Bereich 29 der Bohrung 15 erreicht, schnappt der Sicherungsring in den Bereich 27 des Schaftes 17 ein.

Fig. 2 zeigt eine Variante des Ausführungsbeispiels aus Fig. 1. Bei dieser Variante ist eine demontierbare Einsatzhülse 31 an dem ausfahrbaren Kolbenstangenende 13 z.B. durch Schrauben fixiert, welche den in Fig. 2 oberen Teil der Führungsausnehmung 15 definiert und insbesondere den Bereich 29 erweiterten Durchmessers der Bohrung 15 enthält. Die Lösung gemäß Fig. 2 ermöglicht daher den Ausbau der Hülse 31 und damit auch den vereinfachten Ausbau des Gelenkelementes 19.

Fig. 2 zeigt das Gelenkelement 19 in einer von der Kugelpfanne gelösten Demontagedarstellung, wobei es mit dem unteren Ende des Schaftes 17 am Boden der Führungsausnehmung nahezu anliegt.

In der mit der Fahrtstellung der Kippbrücke korrespondierenden Stellung im betriebsmäßig montierten Zustand sollte der Schaft so in der Bohrung 15 aufgenommen sein, wie es in Fig. 1 gezeigt ist, nämlich so, dass zu beiden axialen Richtungen hin Bewegungsspiel möglich ist.

Ferner ist darauf hinzuweisen, dass bei dem Ausführungsbeispiel gemäß Fig. 2 ein Luftleitungskanal 33 vorgesehen ist, der den beim axialen Ausfahren des Schaftes 17 entstehenden Freiraum 24 zwischen dem Boden der Bohrung 15 und der Unterseite des Schaftes 17 mit der Atmosphäre verbindet. Damit wird erreicht, dass im Falle eines stoßartigen Einschiebens des Schaftes 17 in den Freiraum 24 Luft durch den Luftleitungskanal 33 entweichen kann, ohne dass es zu unerwünschten starken Temperaturerhöhungen aufgrund von Luftkompression im Freiraum 24 kommt.

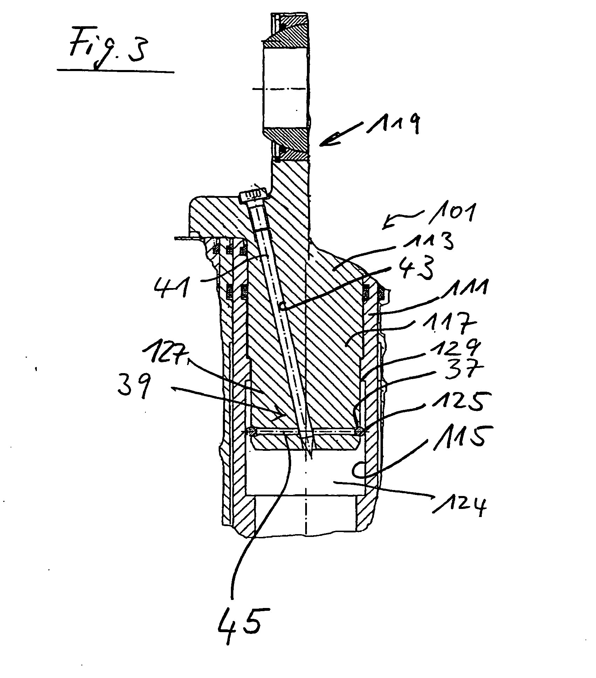

Fig. 3 zeigt ein zweites Ausführungsbeispiel der Erfindung. Teile in Fig. 3, die von ihrer Wirkung her Teilen in den Figuren 1 und 2 entsprechen, sind mit korrespondierenden Bezugszahlen, erhöht um 100, gekennzeichnet, so dass im Wesentlichen auf die Beschreibung der Ausführungsformen gemäß den Figuren 1 und 2 verwiesen werden kann.

Bei der Ausführungsform gemäß Fig. 3 ist das Lagerelement 119 Teil eines Augenlagers. Der Schaft 117 weist an seinem unteren, in die Führungsausnehmung 1 5 eingeführten Ende einen Bereich 1 27 verkleinerten Durchmessers und in diesem Bereich 127 eine Umfangsnut 37 auf, in der ein Sicherungsring 125 mit radial nach innen wirkender Federkraft aufgenommen ist. In dem Einbauzustand gemäß Fig. 3 befindet sich der Sicherungsring 125 axial unterhalb einer Stufe 129 in der Anordnung 115 und ist mittels einer Spreizeinrichtung 39 radial nach außen hin so gespreizt, dass er bei Bewegung des Schaftes 117 nach oben an der Stufe 129 anschlägt. Damit ist das Gelenkelement 119 gegen axiales Herausziehen aus der Führungsausnehmung 115 gesichert.

Die Spreizeinrichtung 39 ist in Fig. 3 eher schematisch dargestellt, wobei ein an seinem unteren Ende konisch geformtes Schraubelement 41 in einer mit einem Gewinde versehenen Schrägbohrung 43 eingeschraubt ist. In dieser Schrägbohrung 43 kann in einer Variante der gezeigten Ausführungsform auch ein dem Kanal 33 aus Fig. 2 entsprechender Luftleitungskanal vorgesehen sein.

Durch mehr oder weniger weites Hineinschrauben der Schraube 41 in den Schaft 117 werden radiale Spreizstifte 45 durch das konisch geformte Ende der Schraube 41 mehr oder weniger weit radial nach außen gedrückt, um den Federring 125 aufzuweiten. Durch Herausschrauben der Schraube 39 wird erreicht, dass der Federring 125 aufgrund seiner Federkraft so weit in die Nut 37 radial einschrumpft, dass er bei Herausziehen des Schaftes 117 aus der Bohrung 115 an der Stufe 129 vorbeikommen kann. Bei dem Ausführungsbeispiel nach Fig. 3 ist es somit ebenfalls möglich, das Gelenkelement 119 betriebsmäßig auszubauen bzw. auszuwechseln.

## Patentansprüche

1. Kolben-Zylinder-Aggregat, insbesondere Teleskoppresse als Kippbetätigungselement für die Kippbrücke eines Kipperfahrzeuges, wobei das Kolben-Zylinder-Aggregat (1; 101) an seinem ausfahrbaren Kolbenstangenende (13; 113) ein Gelenkelement (19; 119) für eine Gelenkverbindung zwischen dem Kolben-Zylinder-Aggregat (1; 101) und der Kippbrücke aufweist, wobei das Gelenkelement (19; 119) einen Schaft (17; 117) hat, der in einer stirnseitigen Führungsausnehmung (15; 115) des ausfahrbaren Kolbenstangenendes (13; 113) relativ zu der Kolbenstange (11; 111) axial verschiebbar gehalten ist, **dadurch gekennzeichnet, dass** in einem Freiraum (24; 124) zwischen dem Boden der Führungsausnehmung und dem dem Boden gegenüberliegenden Ende des Gelenkelementeschaftes (17; 117) außer etwaigen Schmiermittelansammlungen im Wesentlichen nur Gas, insbesondere Luft, vorhanden ist.

2. Kolben-Zylinder-Aggregat nach Anspruch 1, wobei ein Luftleitungskanal (33) den Freiraum (24) mit der Atmosphäre verbindet.

3. Kolben-Zylinder-Aggregat nach Anspruch 2, wobei sich der Luftleitungskanal (33) durch das Gelenkelement (19) erstreckt.

4. Kolben-Zylinder-Aggregat nach einem der vorhergehenden Ansprüche, wobei das Gelenkelement (19; 119) bedarfsweise demontierbar an der Kolbenstange (11; 111) axial verschiebbar fixiert ist.

5. Kolben-Zylinder-Aggregat nach einem der vorhergehenden Ansprüche, wobei die Führungsausnehmung (15; 115) eine vorzugsweise im Wesentlichen zylindrische Axialbohrung oder dgl. in dem Kolbenstangenende (13; 113) ist und wobei der in dieser Führungsausnehmung (15; 115) aufgenommene Gelenkelementschaft (17, 117) einen Bereich (27; 127) verkleinerten Durchmessers mit wenigstens einem in diesem Bereich am Umfang des Gelenkelementeschaftes (17; 117) vorgesehenen Sicherungselement (25; 125) aufweist, wobei ferner zwischen dem Sicherungselement (25; 125) und der stirnseitigen Mündung der Führungsausnehmung (15; 115) eine als Axialanschlag für das Sicherungselement (25; 125) wirkende Stufe (bei 29; 129) in der Führungsausnehmung (15; 115) vorhanden ist, so dass das Sicherungselement (25; 125) den Gelenkelementschaft (17; 117) gegen vollständiges Herausziehen aus der Führungsausnehmung (15; 115) sichert.

6. Kolben-Zylinder-Aggregat nach Anspruch 5, wobei die als Axialanschlag für das Sicherungselement (25) wirkende Stufe (bei 29 in Fig. 2) an einem lösbar mit der Kolbenstange (11) verbundenen Einsatz (31) ausgebildet ist.

7. Kolben-Zylinder-Aggregat nach Anspruch 5 oder 6, wobei das Sicherungselement (25; 125) ein Sicherungsring ist.

## Claims

1. Piston-cylinder assembly, in particular a telescopic jack as a tip actuating element for the tipping bridge of a tipper lorry, wherein the piston-cylinder assembly (1; 101) on its retractable piston rod end (13; 113) comprises a hinge element (19; 119) for a hinge connection between the piston-cylinder assembly (1; 101) and the tipping bridge, wherein the hinge element (19; 119) has a shaft (17; 117), which is held axially displaceably in a front side guiding recess (15; 115) of the retractable piston rod end (13; 113) relative to the piston rod (11; 111), **characterised in that** in a free space (24; 124) between the bottom of the guiding recess and the end of the hinge element shaft (17; 117) opposite the bottom, apart from possible accumulations of lubricant, there is essentially only gas, in particular air.

2. Piston-cylinder assembly according to claim 1, in which an air duct channel (33) connects the free space (24) to the atmosphere.

3. Piston-cylinder assembly according to claim 2, in which the air duct channel (33) extends through the hinge element (19).

4. Piston-cylinder assembly according to one of the preceding claims, in which the hinge element (19; 119) is fixed axially displaceably, if necessary detachably, to the piston rod (11; 111).

5. Piston-cylinder assembly according to one of the preceding claims, in which the guiding recess (15; 115) is a preferably essentially cylindrical axial bore or the like in the piston rod end (13; 113), and in which the hinge element shaft (17,117) mounted in said guiding recess (15; 115) has a section (27; 127) of reduced diameter with at least one securing element (25; 125) provided in this section on the circumference of the hinge element shaft (17; 117), in which also between the securing element (25; 125) and the front side opening of the guiding recess (15; 115) a step (at 29; 129) acting as an axial stop for the securing element (25; 125) is provided in the guiding recess (15; 115), so that the securing element (25; 125) secures the hinge element shaft (17; 117) from complete removal from the guiding recess (15; 115).

6. Piston-cylinder assembly according to claim 5, in which the step (at 29 in Fig. 2) acting as an axial stop for the securing element (25) is formed on an insert (31) connected detachably with the piston rod (11).

7. Piston-cylinder assembly according to claim 5 or 6, in which the securing element (25; 125) is a securing ring.

## Revendications

1. Ensemble piston-cylindre, en particulier presse télescopique formant un élément d'actionnement pour la benne basculante d'un véhicule à benne basculante, l'ensemble piston-cylindre (1 ; 101) comportant, au niveau de son extrémité de tige de piston (13 ; 113) extractible, un élément d'articulation (19 ; 119) pour un assemblage articulé entre l'ensemble piston-cylindre (1 ; 101) et la benne basculante, l'élément d'articulation (19 ; 119) comportant une tige (17 ; 117) qui est maintenue dans un évidement de guidage (15 ; 115) frontal de l'extrémité de tige de piston (13 ; 113) extractible de manière à pouvoir se déplacer dans le sens axial par rapport à la tige de piston (11 ; 111), **caractérisé en ce qu'**un dégagement (24 ; 124), situé entre le fond de l'évidement de guidage et l'extrémité de la tige (17 ; 117) de l'élément d'articulation, opposée au fond, contient, outre d'éventuels amas de lubrifiant, pour l'essentiel uniquement du gaz, en particulier de l'air.

2. Ensemble piston-cylindre selon la revendication 1, dans lequel un conduit de circulation d'air (33) fait communiquer le dégagement (24) avec l'atmosphère.

3. Ensemble piston-cylindre selon la revendication 2, dans lequel le conduit de circulation d'air (33) s'étend à travers l'élément d'articulation (19).

4. Ensemble piston-cylindre selon l'une quelconque des revendications précédentes, dans lequel l'élément d'articulation (19 ; 119) est fixé sur la tige de piston (11 ; 111) de manière amovible en cas de besoin et de manière mobile dans le sens axial.

5. Ensemble piston-cylindre selon l'une quelconque des revendications précédentes, dans lequel l'évidement de guidage (15 ; 115) est un trou axial, de préférence sensiblement cylindrique, ou élément similaire dans l'extrémité de tige de piston (13 ; 113), et dans lequel la tige (17 ; 117) de l'élément d'articulation, logée dans cet évidement de guidage, comporte une zone (27 ; 127) à plus petit diamètre avec au moins un élément de blocage (25 ; 125) prévu dans cette zone sur le pourtour de la tige (17 ; 117) de l'élément d'articulation, sachant qu'il est prévu en outre dans l'évidement de guidage (15 ; 115), entre l'élément de blocage (25 ; 125) et la bouche frontale de l'évidement de guidage (15 ; 115), un décrochement (en 29 ; 129) agissant comme une butée axiale pour l'élément de blocage (25 ; 125), de telle sorte que l'élément de blocage (25; 125) bloque la tige (17 ; 117) de l'élément d'articulation pour empêcher qu'elle soit tirée entièrement hors de l'évidement de guidage (15 ; 115).

6. Ensemble piston-cylindre selon la revendication 5, dans lequel le décrochement (en 29 ; Fig. 2) agissant comme une butée axiale pour l'élément de blocage (25) est réalisé sur un insert (31) assemblé de manière amovible à la tige de piston (11).

7. Ensemble piston-cylindre selon la revendication 5 ou 6, dans lequel l'élément de blocage (25 ; 125) est un circlip.
